# EUROPÄISCHE PATENTSCHRIFT

(11) **EP 3 728 087 B1**
(45) Veröffentlichungstag und Bekanntmachung des Hinweises auf die Patenterteilung: **25.01.2023**
(21) Anmeldenummer: 18827041.7
(22) Anmeldetag: 18.12.2018
(51) Int. Cl.: B65G 47/64, B65G 54/02

(54) **VORRICHTUNG ZUM BEHANDELN VON BEHÄLTERN**
DEVICE FOR TREATING CONTAINERS
DISPOSITIF DE TRAITEMENT DE RÉCIPIENTS

(30) Priorität: 18.12.2017 DE 102017223078
(43) Veröffentlichungstag der Anmeldung: 28.10.2020
(73) Patentinhaber: KRONES AG, 93073 Neutraubling (DE)
(72) Erfinder: JURCHESCU, Heiko, 93073 Neutraubling (DE); KRUEGER, Jochen, 93073 Neutraubling (DE); NEUBAUER, Michael, 93073 Neutraubling (DE)
(74) Vertreter: Grünecker Patent- und Rechtsanwälte PartG mbB
(86) Internationale Anmeldenummer: PCT/EP2018/085555
(87) Internationale Veröffentlichungsnummer: WO 2019/121723

(56) Entgegenhaltungen:
- EP-A1- 3 031 756
- WO-A1-2015/162182
- DE-A1-102007 059 611
- DE-A1-102008 013 951
- JP-A- 2007 039 237

## Beschreibung

Die Erfindung bezieht sich auf eine Vorrichtung zum Behandeln von Behältern und ein Verfahren zum Behandeln von Behältern. Eine beispielhafte herkömmliche Vorrichtung und ein beispielhaftes Verfahren zum Behandeln von Behältern wird unter anderem in der DE 10 2008 013 951 A1 beschrieben.

Es ist bekannt, Behälter auf typischerweise linearen Transportbahnen zu und von einzelnen Behälterbehandlungsstationen zu führen, wo die Behälter behandelt werden. Solche Transportbahnen sind beispielsweise aus der DE 10 2013 218 403 A1 und DE 10 2011 078 555 A1, sowie der WO 2015/036196 A2 bekannt.

Bei solchen Transportbahnen kann eine Bewegung senkrecht zur Transportrichtung (oder senkrecht zur Richtung der Transportbahn) typischerweise nur schwer erfolgen, beispielsweise durch komplexe Programmierung oder Übergabe und Rückübergabe der Behälter, was zusätzliche Schritte und Totzeiten hervorrufen kann. DE102008013951 A1 offenbart eine Vorrichtung nach dem Oberbegriff des Anspruchs 1 und ein Verfahren nach dem Oberbegriff des Anspruchs 9.

Die Erfindung hat zur Aufgabe eines oder mehrere der oben genannten Probleme zu verbessern.

Die Erfindung umfasst eine Vorrichtung nach Anspruch 1, sowie ein Verfahren nach Anspruch 9. Weitere Ausführungsformen sind in den abhängigen Ansprüchen beschrieben.

Die zu behandelnden Behälter können beispielsweise Getränkebehälter und/oder Behälter für andere Zwecke, beispielsweise Kosmetika oder andere Flüssigkeiten oder pastöse Produkte sein, insbesondere können die Behälter Flaschen aus Glas, PET oder anderen Kunststoffen und/oder Dosen, beispielsweise aus Metall, umfassen.

Die Vorrichtung zum Behandeln von Behältern umfasst eine Behälterbehandlungsstation.

Typische Behälterbehandlungsstationen können beispielsweise Stationen zum Reinigen, Spülen, Trocknen oder Befüllen von Behältern, eine Vorrichtung zum Behandeln von Behältern mit einem Plasma (z.B. eine Plasmakammer zur Plasmasterilisation oder einer anderen Plasmabehandlung), Stationen zum Aufbringen von Direktdruck, Beschichtungsstationen oder andere Behälterbehandlungsstationen umfassen oder als solche ausgebildet sein. Beschichtungsstationen sind in der Regel als Beschichtungskammern aufgebaut welche gegenüber dem Atmosphärendruck mittels Dichtungen luftdicht abgedichtet sind. Diese Dichtungen können beliebige Profile aufweisen und weisen an ihren Dichtflächen ein elastisches Material auf.

Bei dem elastischen Material kann es sich insbesondere um Gummi, Silikon oder dergleichen handeln. Somit kann ein Überdruck als auch ein Unterdruck angelegt werden. Somit werden die Behälter in die Beschichtungskammer eingebracht, der entsprechend gewünschte Umgebungsdruck hergestellt (bevorzugt Unterdruck gegenüber dem Atmosphärendruck) und die Behälter anschließend in der Beschichtungskammer außen und/oder innen an der Behälteroberfläche beschichtet. Die Beschichtungskammer enthält ein längliches, stabförmiges Element, insbesondere eine Lanze. Bevorzugt weist die Beschichtungskammer Öffnungen auf. Durch diese Öffnungen kann bevorzugt ein fließfähiges Medium in die Behältnisse eingeleitet werden. Bevorzugt handelt es sich bei diesem fließfähigen Medium um ein für den Plasmaprozess geeignetes Gas. Vorteilhaft kann es sich bei diesem Gas um ein Gemisch aus einem siliziumhaltigen Präkursor und Sauerstoff handeln, insbesondere für eine PECVD (=plasma enhanced chemical vapor deposition) mit Siliziumoxid. Es sind jedoch auch andere Gase denkbar, zum Beispiel Acetylen für die Abscheidung von sog. DLC-Schichten. Für eine Plasmasterilisation können z.B. Argon und Wasserdampf in die Behälter eingeleitet werden. Vorzugsweise erfolgt das Einführen des Gases über die gerade beschriebene Lanze, die ihrerseits Öffnungen zur gewünschten Verteilung des Gases im Behälter und/oder der Kammer aufweist.

Vorteilhaft wird dieses Gas homogen im Inneren der Flasche verteilt.

Vorteilhaft dient die Beschichtungskammer als Elektrode für die Plasmaerzeugung. Die Energie, die das Plasma zünden soll, kann dann in Form von Hochfrequenz über diese Behandlungseinrichtung in das System eingekoppelt werden.

Bevorzugt weist die Beschichtungskammer eine zweite Elektrode auf. Diese Elektrode kann sich vorteilhaft außerhalb des Behältnisses, vorteilhaft jedoch auch innerhalb des Behältnisses befinden. Diese zweite Elektrode kann vorteilhaft geerdet oder vorteilhaft floatend mit der ersten Elektrode verbunden sein

Gemäß einer vorteilhaften Ausführungsform sind die beiden Elektroden im Bereich des Behälters angeordnet. Sofern eine Lanze zur Einleitung des Gases vorhanden ist, sind die beiden Elektroden vorzugsweise in und/oder an und/oder um die Lanze herum angeordnet.

Bei einer alternativen bevorzugten Ausführungsform kann darauf verzichtet werden, dass die Beschichtungskammer als Elektrode für die Plasmaerzeugung dient. Vorteilhaft weist eine solche Ausführungsform eine Vorrichtung zur Erzeugung eines elektromagnetischen Feldes auf.

Vorteilhaft ist die Vorrichtung dazu geeignet, ein elektromagnetisches Feld zu erzeugen, das dazu geeignet ist, im eingeleiteten Gas ein Plasma zu zünden. Bei diesem erzeugten elektromagnetischen Feld kann es sich beispielsweise um ein hochfrequentes Feld, jedoch auch z. B. um eine Mikrowelle handeln. Vorteilhaft befindet sich diese Vorrichtung außerhalb des Behältnisses. Bevorzugt wird das elektromagnetische Feld somit von außerhalb des Behältnisses in das Behältnis eingestrahlt.

Bei einer vorteilhaften Ausführungsform weist die Beschichtungskammer ein Ventil auf, mit dem die Beschichtungskammer, insbesondere nach Beendigung des Plasmaprozesses, belüftet werden kann. Während die Behälter der Plasmabehandlung unterzogen wird, wird vorteilhaft permanent das entstehende Abgas abgepumpt.

Typischerweise wird an einer Behälterbehandlungsstation ein aktiver Behandlungsschritt der Behälter oder eine Inspektion/Messung vorgenommen wie bei den zuvor beschriebenen Behälterbehandlungsstationen.

Eine Transportbahn in einer erfindungsgemäßen Vorrichtung ist typischerweise eine lineare Transportbahn (an der die Transportelemente an jeder Stelle nur entlang einer vorgegebenen Linie bewegt werden können). Die Transportbahn kann insbesondere eine Schiene umfassen. Optional kann die lineare Transportbahn in einer (typischerweise horizontalen) Ebene angeordnet sein.

Beispielsweise kann die Transportbahn eine Schiene umfassen, entlang der Transportelemente durch einen Linearmotor einzeln beweglich und ansteuerbar sind (insbesondere z.B. einzeln beschleunigt oder gebremst werden können). Die Transportbahn kann allerdings auch andere Transportbahnelemente umfassen oder als solche ausgebildet sein, beispielsweise Elemente, in denen die Transportelemente durch Luftdruck oder andere bekannte Möglichkeiten befördert und gesteuert werden.

Die Vorrichtung umfasst mindestens ein Transportelement, das entlang der Transportbahn bewegbar ist. Die Vorrichtung umfasst des Weiteren ein Trägerelement zur Aufnahme von mindestens einem Behälter, das über das Transportelement entlang der Transportbahn geführt werden kann. Das Trägerelement kann mit dem Transportelement dauerhaft verbunden sein, beispielsweise durch eine Schweißung, Verklebung oder andere dauerhafte Verbindung, oder lösbar verbunden sein, beispielsweise durch eine Einrastvorrichtung, magnetische Kopplung oder lösbare Schrauben.

Typischerweise umfasst eine Vorrichtung zum Behandeln von Behältern mehrere Transportelemente und mehrere Trägerelemente.

Die Transportelemente können einzeln ansteuerbar sein (insbesondere beispielsweise solange sie nicht, zum Beispiel über ein Trägerelement, gekoppelt sind).

Die Transportbahn ist typischerweise so angeordnet, dass entlang der Transportbahn das Transportelement mit einem Trägerelement zur Aufnahme von mindestens einem Behälter in die Nähe der Behälterbehandlungsstation (zur Behälterbehandlungsstation) und aus der Nähe der Behälterbehandlungsstation (von der Behälterbehandlungsstation) weg bewegt werden kann.

Das Trägerelement kann über ein Transportelement oder mehrere Transportelemente an der Transportbahn entlang geführt werden. Beispielsweise kann ein Trägerelement mit der Transportbahn über zwei Transportelemente verbunden sein, von denen eines steuerbar ist und das zweite passiv (ohne Steuerung) zur Stabilisierung mitläuft. In einem solchen Fall können beispielsweise die steuerbaren Transportelemente von jedem Trägerelement einzeln ansteuerbar sein.

Das Trägerelement ist zur Aufnahme von mindestens einem Behälter geeignet und umfasst dafür ausgebildete Vorrichtungen (im Folgenden auch Aufnahmen genannt), beispielsweise Klammern oder andere Behälteraufnahmevorrichtungen. Typischerweise sind diese Behälteraufnahmevorrichtungen oder Klammern so angeordnet, dass eine Behälterbehandlung in der Behälterbehandlungsstation mit ihnen erfolgen kann, sie also die Behälterbehandlung nicht behindern. Die Klammern können insbesondere passiv sein, d.h. ohne äußeren Einfluss in ihrem jeweiligen Zustand (geöffnet oder geschlossen) verbleiben, sodass nur zum Umschalten zwischen geöffnetem und geschlossenem Zustand auf sie eingewirkt werden muss. Insbesondere können solche passive Klammern dann im geschlossenen Zustand die Behälter von selber halten. Es können in anderen Ausführungsformen auch aktiv gesteuerte Klammern verwendet werden, die aktiv geschlossen gehalten werden müssen und ohne Einwirkung geöffnet sind, oder umgekehrt, also Klammern, die aktiv geöffnet gehalten werden müssen und ohne Einwirkung geschlossen sind. Die Aufnahmen können optional höhenverstellbar sein, sodass sie für Behälter verschiedener Größen verwendet werden können.

Die Transportbahn umfasst mindestens ein Segment, das (gegenüber dem Rest der Transportbahn) zusammen mit einem Trägerelement bewegt werden kann, sodass durch die Bewegung des Segments die am Trägerelement aufgenommenen Behälter zur Behälterbehandlung in die Behälterbehandlungsstation eingebracht werden können. Das Segment kann beispielsweise entlang einer Schiene geführt werden. Die Bewegung kann pneumatisch oder elektrisch gesteuert sein.

Bei einer Transportbahn, bei der die Transportelemente entlang einer Schiene durch einen Linearmotor geführt werden, kann das Segment der Transportbahn, das gegenüber dem Rest der Transportbahn bewegt wird, nur die Schiene umfassen und der Linearmotor nicht beweglich an der ursprünglichen Stelle verbleiben. In anderen Ausführungsformen kann die Transportbahn (und entsprechend das Transportbahnsegment) die Einheit von Schiene, auf der die Transportelemente geführt werden, und dem entsprechenden Linearmotorstück umfassen, sodass das bewegte Segment ein Segment der Schiene und ein Segment des Linearmotors umfasst.

Die Transportbahn kann aus mehreren Segmenten modular aufgebaut sein. Sie kann mindestens eine geschlossene Kurve umfassen, entlang der die Trägerelemente mit den Transportelementen geführt werden können. Außerdem kann sie eine oder mehrere Weichen, und Abstellbereiche und/oder Ausleitvorrichtungen für Trägerelemente umfassen.

Die Bewegung des Segmentes der Transportbahn kann senkrecht zur Transportrichtung von Transportelementen entlang der Transportbahn (oder senkrecht zur Transportebene) sein, dies muss aber nicht sein. Beispielsweise kann die Bewegung senkrecht nach unten oder senkrecht zur Seite oder senkrecht nach oben erfolgen, oder schräg im Raum. Die Vorrichtung ist typischerweise so ausgebildet, dass die entsprechende Bewegung auch wieder zurück ausgeführt werden kann, so dass das Trägerelement an dem Segment wieder zurück auf die Transportbahn geführt werden kann. Dadurch können die Behälter nach der Behandlung in der Behälterbehandlungsstation direkt auf die Transportbahn zurückgeführt werden, ohne dass die Behälter für die Behälterbehandlung an die Behälterbehandlungsmaschine übergeben werden müssen.

Eine erfindungsgemäße Vorrichtung kann mehr als eine Behälterbehandlungsstation umfassen. Insbesondere können beispielsweise mehrere gleichartige Behälterbehandlungsstationen parallel angeordnet sein, so dass parallel Behälter an mehreren Trägerelementen behandelt werden können. Alternativ oder zusätzlich können verschiedene Behälterbehandlungsstationen nacheinander angeordnet sein, in die ein oder mehrere Behälter (optional jeweils über bewegliche Segmente der Transportbahn) eingeführt werden können, so dass mehrere verschiedene Behälterbehandlungsschritte nacheinander ausgeführt werden können.

Erfindungsgemäß kann die Behälterbehandlungsstation zur gleichzeitigen Behandlung von mehreren Behältern ausgebildet sein (Takt- oder Batchmodul) und das Trägerelement zur Aufnahme von mehreren Behältern ausgebildet sein. Dadurch kann in einem Durchgang eine Behandlung von mehreren Behältern erfolgen und diese dann, ohne weitere Übergabe oder Ähnliches zurück auf die Transportbahn geführt werden. Insbesondere kann somit eine taktweise Behandlung erfolgen. Während der Behandlung können andere Trägerelement in einer Warteschleife, oder auf der Transportbahn warten und/oder in anderen Behälterbehandlungstationen behandelt werden.

Erfindungsgemäß kann das Trägerelement dazu ausgebildet sein, die Behälterbehandlungsstation luftdicht zu verschließen, wenn die Behälter zu Behälterbehandlung in die Behälterbehandlungsstation eingebracht sind. Durch eine Ausbildung des Trägerelementes, so dass es als Verschluss für die Behälterbehandlungsstation verwendet werden kann, kann insbesondere die Notwendigkeit, einen zusätzlichen Verschließschritt durchzuführen, vermieden werden und somit die Zeitdauer der Behälterbehandlung beschleunigt werden. Beispielsweise kann durch das Trägerelement eine Behälterbehandlungsstation luftdicht verschließbar sein, sodass sie evakuiert werden kann. Alternativ kann z.B. bei einer Station zum Bedrucken von Behältern die Behälterbehandlungsstation durch das Trägerelement derart verschlossen werden, dass keine UV-Strahlung austreten kann.

Erfindungsgemäß kann die Vorrichtung so ausgebildet sein, dass bei der Bewegung des Segments und dem Einbringen der am Trägerelement aufgenommenen Behälter in die Behälterbehandlungsstation, das bewegte Segment der Transportbahn durch ein weiteres Transportbahnsegment ersetzt wird. Somit kann die Transportbahn auch während der Behandlung von Behältern in der Behälterbehandlungsstation geschlossen sein, so dass weitere Trägerelemente vorbeigeführt werden können. Wenn das bewegte Segment an einer Schiene angeordnet ist und entlang dieser bewegt wird, kann in einem Abstand auf der gleichen Schiene das Transportbahnsegment angeordnet sein, das das bewegte Segment ersetzt. Vorteilhafterweise kann der Abstand so bemessen sein, dass bei Positionierung des bewegten Segmentes in der Position, in der die Behälter in der Behälterbehandlungsstation behandelt werden können, das ersetzende Transportbahnsegment genau in der Transportbahn angeordnet ist.

Insbesondere für den Fall, dass das bewegte Segment ein Segment eines Linearmotors umfasst, kann es vorteilhaft sein, wenn jedes der Segmente, die bewegbar sind, einen eigenen und von anderen Segmenten unabhängig steuerbaren Energieanschluss (z.B. für Strom und/oder Druckluft, etc.) haben. Bei einem modularen Aufbau kann die Transportbahn aus lauter Segmenten aufgebaut sein, die einzeln steuerbar mit Strom versorgt werden und auch die optional vorhandenen zusätzlichen Segmente (die bewegte Segmente ersetzen) können einzeln steuerbar mit Strom/Energie versorgt werden.

Erfindungsgemäß kann die Behälterbehandlungsstation ebenfalls beweglich angeordnet sein. Beispielsweise kann sie so angeordnet sein, dass sie sich auf das Trägerelement zubewegt, wenn dieses zur Behälterbehandlungsstation hinbewegt wird, sodass zu einem vollständigen Einführen der Behälter in die Behälterbehandlungsstation sowohl eine Bewegung des Segments der Transportbahn mit den Trägerelementen, als auch der Behälterbehandlungsstation notwendig ist. Dadurch kann eine bessere Zugänglichkeit der Behälterbehandlungsstation im nicht benutzen Zustand hervorgerufen werden und/oder sichergestellt werden, dass Behälter nur dann in die Behälterbehandlungsstation eingeführt werden, wenn diese tatsächlich auch benutzt werden kann.

Das Trägerelement kann insbesondere dazu ausgebildet sein, die Behälter kopfüber, also mit Öffnung nach unten, zu transportieren. Dies kann insbesondere für einige Behälterbehandlungsstationen, wie beispielsweise eine Plasmakammer, Reinigung, Spülung oder Ähnliches hilfreich sein, da die Behälter dann bereits in der richtigen Position zur Behandlung sein können.

Die Vorrichtung kann des Weiteren eine Wendeeinheit umfassen, mit der die Behälter um 180° gedreht werden können, z.B. sodass sie kopfüber transportiert werden, sowie eine Übergabeeinrichtung, mit der die Behälter von der Wendeeinheit an ein Trägerelement übergeben werden können. Durch eine solche Wendeeinheit kann ermöglicht werden, dass Behälter in aufrechter Position zugeführt werden, aber um 180° gedreht sind, wenn sie an das Trägerelement übergeben werden.

Beispielsweise kann eine Zuführung in einem linearen (optional kontinuierlichen) Strom, beispielsweise aus einer Blasmaschine, erfolgen. Dann können die entsprechenden Behälter mit einer Wendeeinheit um 180° gedreht werden und dann an das Trägerelement übergeben werden. Insbesondere kann das Trägerelement dazu ausgebildet sein, mehrere Behälter aufzunehmen, sodass damit dann eine taktweise Behandlung von Behältern in Gruppen möglich ist.

Die Vorrichtung kann eine Übergabeeinrichtung umfassen, mit der Behälter von einem Trägerelement an eine Wendeeinheit übergeben werden können. Die Wendeeinheit kann dafür ausgebildet sein, die Behälter um 180° drehen, sodass diese z.B. nachdem sie kopfüber im Trägerelement transportiert wurden, wieder aufrecht transportiert werden.

Hinter der Wendeeinheit können weitere Bauelemente angeordnet sein, die die Behälter abtransportieren können, beispielsweise insbesondere Bauteile, die die Behälter in einem linearen (optional kontinuierlichen) Strom abtransportieren können (etwa ein Übergabestern, eine Einteilschnecke, oder Ähnliches). Damit kann insbesondere ein (linearer) Weitertransport der behandelten Behälter erfolgen, beispielsweise zu einem Füller und anschließend einem Verschließer.

Die Übergabeeinrichtung, mit der Behälter von der Wendeeinheit an ein Trägerelement (oder umgekehrt) übergeben werden können, kann als Teil der Wendeeinheit und/oder des Trägerelementes ausgebildet sein, sodass die Übergabe direkt von der Wendeeinheit an das Trägerelement (oder umgekehrt) erfolgt. Alternativ können zusätzliche (Transport)elemente der Übergabeeinrichtung zwischen Wendeeinheit und Trägerelement angeordnet sein, sodass eine Übergabe nicht direkt von der Wendeeinheit an das Trägerelement (oder umgekehrt) erfolgt.

Optional kann die Bewegung des Segments zur Behälterbehandlungsstation eine Abwärtsbewegung senkrecht zur Transportbahn (senkrecht zur Transportbewegung entlang der Transportbahn oder - wenn die Transportbahn nicht gerade verläuft - senkrecht zur Transportebene) sein. Optional ist das Trägerelement in dieser Ausführungsform so ausgebildet, dass es als Deckel für die Behälterbehandlungsstation, beispielsweise eine Plasmakammer oder eine Direktdruckkammer, dient und diese verschließen kann.

Die Erfindung umfasst des Weiteren ein Verfahren zum Behandeln von Behältern mit den Schritten: Transportieren der Behälter über ein Transportelement entlang der Transportbahn mit einem Trägerelement; Bewegen eines Segments der Transportbahn mit dem Trägerelement, sodass durch die Bewegung des Segments die am Trägerelement aufgenommenen Behälter zur Behälterbehandlung in die Behälterbehandlungsstation eingebracht werden; Behandeln der Behälter in der Behälterbehandlungsstation; Bewegen des Segments der Transportbahn mit dem Trägerelement, so dass die Behälter aus der Behälterbehandlungsstation entfernt werden und auf die Transportbahn zurückgeführt werden.

Optional kann ein solches Verfahren auch noch alle weiteren zuvor im Zusammenhang mit der Behälterbehandlungsstation beschriebenen Verfahrensschritte umfassen, insbesondere solche, die mit einer solchen Behälterbehandlungsstation durchgeführt werden. Das Verfahren kann beispielsweise mit einer solchen Vorrichtung durchgeführt werden.

Insbesondere kann ein Verfahren noch einen oder mehrere der folgenden Schritte umfassen: Zuführen von Behältern in einem linearen Strom zu einer Wendeeinheit, Drehen von einem oder mehreren Behältern um 180° mit einer Wendeeinheit (z.B. so, dass sie im weiteren Verlauf kopfüber gedreht sind), Übergeben von den Behältern von einer Wendeeinheit an ein Trägerelement, wobei die Übergabe direkt oder indirekt erfolgen kann (also direkt von der Wendeeinheit an das Trägerelement oder über ein oder mehrere Zwischenelemente), Verschlie-ßen der Behälterbehandlungsstation mit dem Trägerelement, Übergeben der Behälter vom Trägerelement an eine Wendeeinheit, wobei die Übergabe direkt oder indirekt erfolgen kann (also direkt vom Trägerelement an die Wendeeinheit oder über ein oder mehrere Zwischenelemente), Drehen der Behälter um 180° mit der Wendeeinheit (z.B. so, dass sie aus einer Position, in der die Behälter kopfüber gedreht sind, wieder aufrecht gedreht sind), Wegführen von Behältern von der Wendeeinheit in einem linearen Strom, z.B. zur Weiterbehandlung, etwa zu einem Füller. Das Verfahren kann des Weiteren ein Ersetzen des bewegten Segments der Transportbahn durch ein weiteres Transportbahnsegment umfassen, sodass weitere Trägerelemente an der Behälterbehandlungsstation vorbeigeführt werden können, während dort Behälter behandelt werden. Optional kann es auch ein Bewegen der Behälterbehandlungsstation, beispielsweise in Richtung der Transportbahn, umfassen, beispielsweise so, dass das Trägerelement und die Behälterbehandlungsstation sich aufeinander zubewegen, wenn die Behälter eingebracht werden und sich voneinander wegbewegen, wenn die Behälter wieder zurück zur Transportbahn geführt werden.

Gemäß einer Weiterbildung können im geschlossenen Zustand der Kammer Stege zwischen den Behältern angebracht sein, sodass eigene Räume innerhalb der Kammer entstehen. Die Stege können dabei derart dimensioniert sein, dass die Räume bei geschlossener Kammer hermetisch voneinander getrennt sind. Die Stege können dabei sowohl an der Kammer als auch am Trägerelement angebracht sein. Insbesondere bei Sterilisations-, Druck- oder Beschichtungsaufgaben kann eine derartige Trennung der Kammer in (hermetisch abgeschlossene) Räume vorteilhaft sein, um die Prozesssteuerung der Einzelprozesse einfacher gestalten zu können.

Insbesondere bei einem Unterdruckprozess (z.B. Behälterbeschichtung) wirken sich entsprechend dimensionierte Stege positiv auf das Volumen in der Kammer aus, sodass eine geringere bzw. schnellere Evakuierung durchgeführt werden kann.

Weitere Ausführungsformen der Erfindung werden im Folgenden anhand der Figuren beschrieben. Hierbei zeigt
Figur 1a schematisch Teile einer Vorrichtung vor der Bewegung eines Segments,
Figur 1b schematisch Teile einer Vorrichtung nach der Bewegung des Segments,
Figur 1c schematisch eine Behälterbehandlungsstation
Figur 2 einen Querschnitt durch eine Vorrichtung,
Figur 3 ein Trägerelement,
Figur 4a und 4b Ausschnitte einer beispielhaften Wendeeinheit,
Figur 5 einen schematischen Aufbau von Teilen einer Vorrichtung,
Figur 6 einen weiteren schematischen Aufbau einer Vorrichtung.

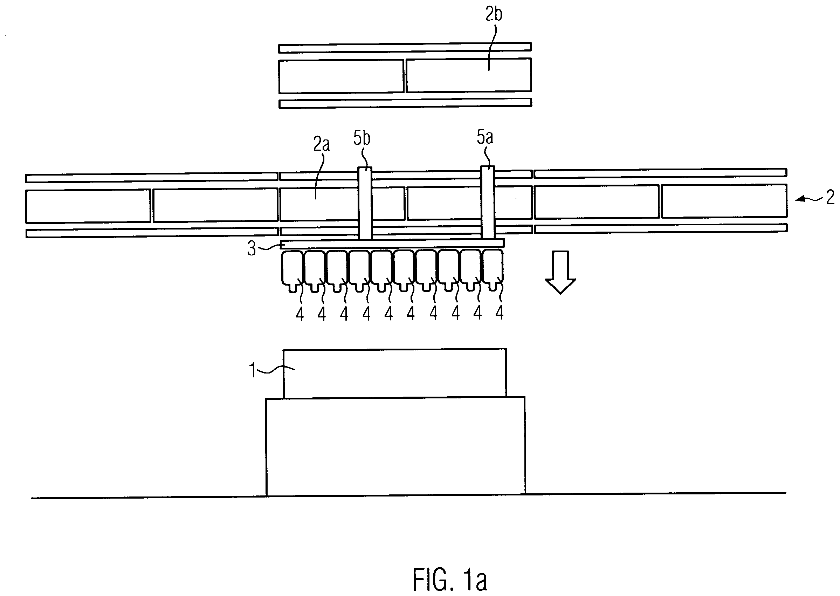

Figur 1a zeigt einen schematischen Querschnitt durch eine Vorrichtung zum Behandeln von Behältern. Sie umfasst eine Behälterbehandlungsstation 1 und eine Transportbahn 2 mit einem beweglichen Transportbahnsegment 2a.

Die Vorrichtung umfasst ein Trägerelement 3 zur Aufnahme von mindestens einem Behälter 4 (in der gezeigten Figur sind beispielhaft mehrere Behälter eingezeichnet). Das Trägerelement 3 kann über Transportelemente 5a und 5b entlang der Transportbahn 2 geführt werden, und zwar zu der Behälterbehandlungsstation 1 hin und davon weg. Erfindungsgemäß ist das Segment 2a der Transportbahn 2 so ausgebildet, dass es mit dem Trägerelement 3 zusammen bewegt werden kann, sodass durch die Bewegung des Segments 2a die am Trägerelement 3 aufgenommen Behälter 4 zur Behälterbehandlung in die Behälterbehandlungsstation 1 eingebracht werden können.

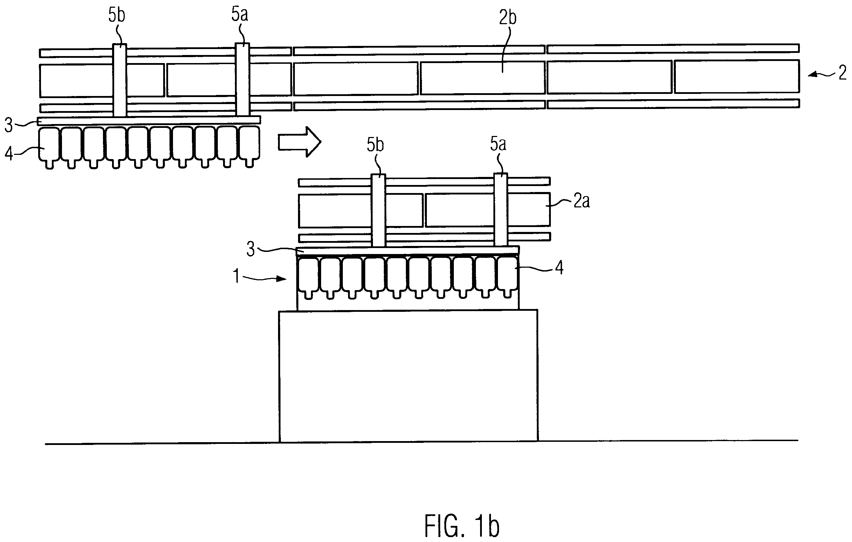

In Figur 1b ist die Situation gezeigt, in der dieser Schritt erfolgt ist und die Behälter 4 in der Behälterbehandlungsstation 1 eingebracht sind, sodass sie dort behandelt werden können.

In Figur 1a/1b ist beispielhaft eine Ausführungsform gezeigt, in der das Trägerelement 3 als Verschluss, hier beispielhaft Deckel, der Behälterbehandlungsstation dient.

Ebenfalls gezeigt in Figur 1a und 1b ist ein optional bei einer Vorrichtung mögliches weiteres Transportbahnsegment 2b, das das Transportbahnsegment 2a ersetzt, während die Behälter in der Behälterbehandlungsstation eingebracht sind. Somit können weitere Trägerelemente 3 mit Behältern 4 (in Figur 1b ist beispielhaft eines von ihnen schematisch gezeigt) auf der Transportbahn vorbeigeführt werden.

In den Figuren 1a/1b werden die Trägerelemente 3 beispielhaft über zwei Transportelemente 5a, 5b entlang der Transportbahn geführt. Alternativ (hier nicht gezeigt) können Trägerelemente auch über ein oder mehr als zwei Transportelement entlang der Transportbahn geführt werden. Die Transportbahn kann beispielsweise eine Schiene sein oder umfassen, entlang der die Transportelemente (hier 5a, 5b), hier beispielhaft in Form von Movern / Shuttles (auch Läufer oder Schlitten genannt) gezeigt, durch einen Linearmotor bewegt werden. In der gezeigten Ausführungsform wird beispielhaft das Transportbahnsegment, bestehend aus einem Segment der Schiene und einem Segment des Linearmotors, bewegt. In anderen Ausführungsformen (nicht gezeigt), kann der Linearmotor verbleiben und das Segment der Transportbahn nur ein Schienensegment umfassen.

Bei solchen Trägerelementen, die mit 2 oder mehr Transportelementen an der Transportbahn entlanggeführt werden, kann insbesondere eines der Transportelemente (z.B. 5a) einzeln ansteuerbar sein und kann insbesondere von anderen Transportelementen an anderen Trägerelementen unabhängig ansteuerbar sein. Das oder die weiteren Transportelemente (z.B. 5b) an dem Trägerelement können der Stabilisierung dienen und nicht ansteuerbar sein und/oder synchron mit dem ersten Transportelement, beispielhaft 5a, ansteuerbar sein.

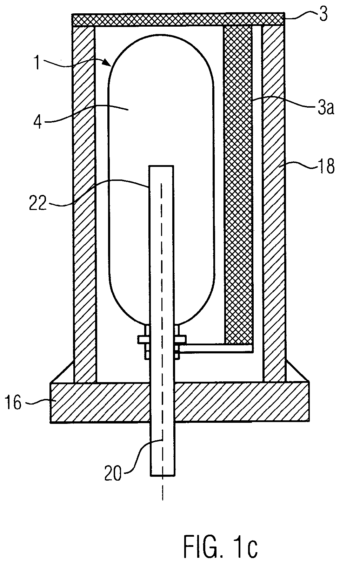

Fig. 1 c zeigt eine Darstellung einer Behandlungsstation 1 in diesem Fall eine Beschichtungsstation. In die Behandlungsstation 1 ist ein Behältnis 4 eingeführt. Dieses wird von einem Trägerelement 3 mithilfe einer Aufnahme 3a gehalten, wobei die Aufnahme 3a derart aufgebaut ist, dass sie einen Befestigungsmechanismus wie einen Greifer umfasst, der das Behältnis im Bereich der Mündung greifen bzw. halten kann. Das Trägerelement 3 kann senkrecht nach oben bewegt werden, so dass das von der Aufnahme 3a gehaltene Behältnis 4 ebenfalls senkrecht nach oben und aus der Behandlungsstation 1 herausbewegt wird.

Die Behandlungsstation 1 umfasst ein stationäres Bodenteil 16 und stationäre Wandungen 18. An dem Trägerelement 3 ist die Aufnahme 3a angeordnet. Dieses ist gemeinsam mit der Aufnahme 3a beweglich. Das Trägerelement 3 ist gleichzeitig das Verschlusselement, das nach oben bewegt wird und von den Wandungen 18 der Behandlungsstation 1 abgehoben werden kann. Befindet sich das Trägerelement 3 dagegen - wie gezeigt - in seiner tiefsten Position, schließt das Trägerelement 3 als Verschlusselement gemeinsam mit den Wandungen 18 die Behandlungsstation 8 luftdicht ab.

In der Behandlungsstation 1 befindet sich außerdem eine Behandlungseinrichtung 20. Diese ist vorteilhaft ebenfalls stationär angeordnet, so dass das Behältnis 4 beim Einführen in die Behandlungsstation 1 über die Behandlungseinrichtung 20 geschoben wird. Die Behandlungseinrichtung ist hier als Lanze ausgebildet. Die Lanze 20 ist hohlzylindrischen Aufbaus und weist mehrere Öffnungen 22 auf, durch die vorteilhaft Behandlungsgas in das Innere des Behältnisses 4 geführt werden kann. Die Lanze weist an deren Außenumfang zwei hier nicht gezeigte drahtförmige Elektroden auf, die spiralförmig mit vorzugsweise gleichbleibendem Durchmesser um die Lanze herumgewickelt sind. Die Wicklung erfolgt vorzugsweise so, dass sich die Elektroden nicht berühren, einen gleichmäßigen Abstand zwischen den Wicklungen haben.

Gemäß einer alternativen Ausführungsform ist die Lanze 20 beweglich und wird erst in den Behälter 4 eingefahren, wenn sich dieser in der Kammer 1 befindet. Dabei kann das Fahrprofil derart gestaltet sein, dass sich die Lanze 20 bereits bewegt, wenn der Behälter 4 noch nicht die endgültige Position in der Kammer 1 erreicht hat, um Behandlungszeit zu sparen.

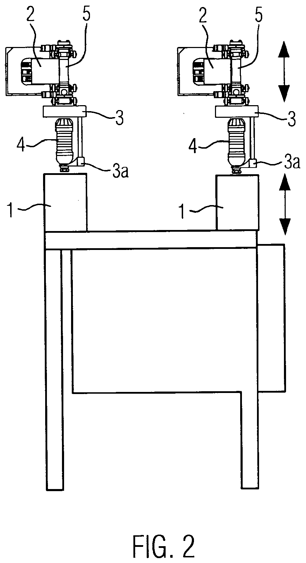

Figur 2 zeigt einen schematischen Querschnitt durch eine Vorrichtung, die beispielhaft zwei parallel zueinander angeordnete Behälterbehandlungsstationen 1 umfasst. An den parallelen Strängen der Transportbahn 2 sind über die Transportelemente 5 Trägerelemente 3 mit Behälter 4 in Aufnahme 3a (im Querschnitt ist nur ein Behälter und eine Aufnahme sichtbar, aber jedes Trägerelement kann optional mehr als einen Behälter aufnehmen und entsprechend viele Aufnahmen 3a umfassen) angebracht. In Figur 2 ist schematisch eine Aufnahme 3a für den Behälter als Klammer gezeigt.

In der schematisch gezeigten Ausführungsform werden die Behälter kopfüber transportiert und können zusammen mit der Haltevorrichtung in die Behälterbehandlungsstationen 1 eingebracht werden. Ebenfalls schematisch eingezeichnet ist eine optionale Bewegung der Behälterbehandlungsstationen. In dem gezeigten Beispiel erfolgt die Bewegung der Transportbahnsegmente vertikal - in diesem Fall senkrecht zur Transportbahn (oder zur Transportebene) - und die Bewegung der Behälterbehandlungsstationen senkrecht auf die Transportbahn zu, sodass die Behälter in die Behälterbehandlungsstationen eingebracht werden können (bzw. von ihr weg, wenn die Behälter wieder zurück zur Transportbahn geführt werden).

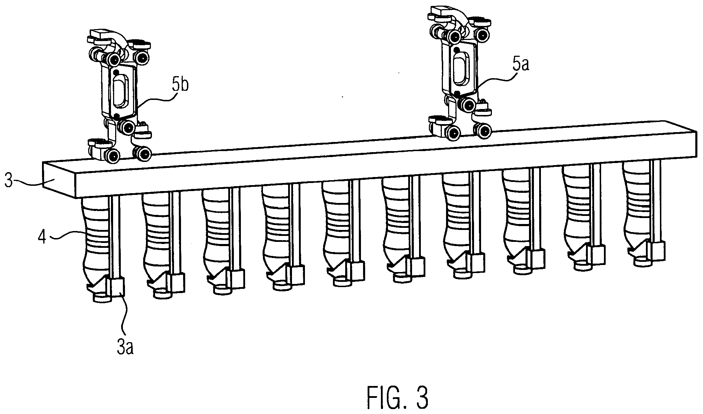

In Figur 3 ist ein schematisches Trägerelement 3 detaillierter gezeichnet. In dem gezeigten Beispiel umfasst das Trägerelement 3 mehrere Aufnahmen 3a für Behälter (beispielhaft sind hier zehn eigezeichnet, aber es kann auch mehr oder weniger als zehn Aufnahmen für Behälter umfassen). Die Aufnahmen 3a sind schematisch als Klammern gezeichnet, in denen die Behälter 4 kopfüber gehalten werden. In dem gezeigten Beispiel können die Aufnahmen 3a beispielhaft höhenverstellbar sein, sodass das Trägerelement 3 auch für Behälter (hier Flaschen) anderer Höhen eingesetzt werden kann.

Das Trägerelement kann über Transportelemente 5a und 5b entlang der Transportbahn geführt werden. Die Transportelemente 5a und 5b sind hier beispielhaft als Mover eingezeichnet, die an einer Schiene entlang durch einen Linearmotor geführt werden können. In anderen Ausführungsformen können die Transportelemente anders ausgeführt sein (nicht gezeigt).

Die Transportelemente 5a und 5b können gleich oder verschieden sein. Beispielsweise kann Transportelement 5a einzeln ansteuerbar sein, während Transportelement 5b nur der Stabilisierung dienen und nicht ansteuerbar sein kann und/oder Transportelemente 5a und 5b können beide synchron steuerbar sein. Das Trägerelement kann auch noch über weitere Transportelemente an der Transportbahn geführt werden, beispielsweise 3 oder mehr oder nur über ein Transportelement an der Transportbahn entlanggeführt werden (hier nicht gezeigt).

Die Transportelemente können fest oder lösbar mit dem Trägerelement 3 verbunden sein.

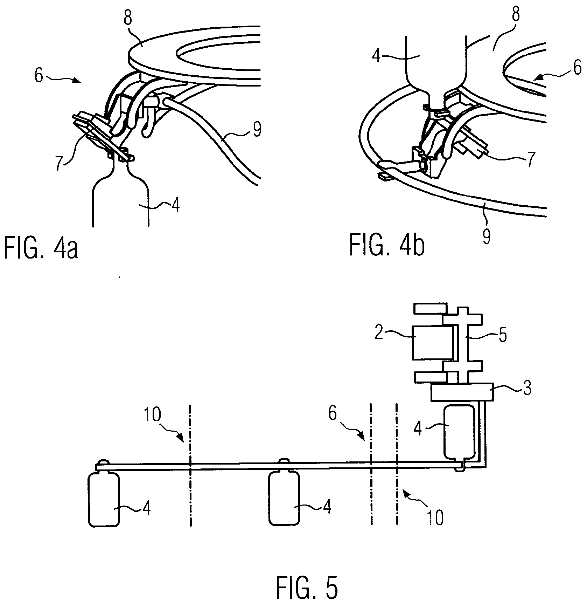

Figuren 4a und 4b zeigen Ausschnitte aus einer beispielhaften Wendeeinheit 6, die dazu ausgebildet ist einen Behälter um 180° zu drehen, sodass der Behälter danach kopfüber steht bzw. von einer Position in der er kopfüber steht, wieder aufrecht steht.

Dazu kann die Wendeeinheit 6 ein Befestigungselement 7 für den Behälter (z.B. eine aktive oder passive Klammer) umfassen, das gegenüber einem beweglichen, typischerweise drehbaren, Teil 8 der Wendeeinheit beweglich angeordnet ist und entlang einer Kurve 9 geführt wird. Durch diese Führungskurve 9 wird das Befestigungsteil so bewegt, dass der daran befestigte Behälter 4 um 180° gedreht wird und damit kopfüber steht. Eine beispielhafte Anfangsposition ist in Figur 4a gezeigt, eine mögliche Endposition in Figur 4b. Wird der Behälter dann in einer Position kopfüber weitergeführt (aus der Position von Figur 4b wieder zurück zu Position 4a) wird er noch einmal um 180° gedreht und wieder in die ursprüngliche Lage zurückgebracht. Typischerweise ist die Führungskurve 9 eine geschlossene Kurve. Durch eine solche Wendeeinheit kann also, wenn der Behälter sie komplett durchläuft, der Behälter um 180° und zurück gedreht werden. Eine erfindungsgemäße Vorrichtung kann durch eine solche Wendeeinheit vor der Übergabe an das Trägerelement 3 und nach dem Transport durch das Trägerelement 3 so ausgebildet sein, dass ein Behälter 4 zwar im Trägerelement 3 kopfüber transportiert werden kann, aber der Vorrichtung aufrecht zugeführt und aufrecht wieder von der Vorrichtung weggeführt werden kann.

Figur 5 zeigt einen schematischen Aufbau einer möglichen Vorrichtung. Dort werden die Behälter aufrecht zugeführt und über eine Übergabeeinrichtung, beispielsweise einen Übergabestern, an die Vorrichtung übergeben. In der Vorrichtung werden Sie über eine Wendeeinheit um 180° gedreht, sodass sie dann kopfüber stehen und über eine Übergabeeinheit 10 (wie zuvor beschrieben kann diese als eigenes Bauteil ausgebildet sein, mehrere Bauteile umfassen, und/oder als Teil der Wendeeinheit und/oder des Trägerelementes ausgebildet sein) an das Trägerelement 3 übergeben. Der Behälter 4 ist beispielhaft kopfüber im Trägerelement 3 eingezeichnet und kann dann entlang der Transportbahn 2 durch Transportelement 5 geführt werden und dann in die Behälterbehandlungsstation eingebracht werden (nicht gezeigt).

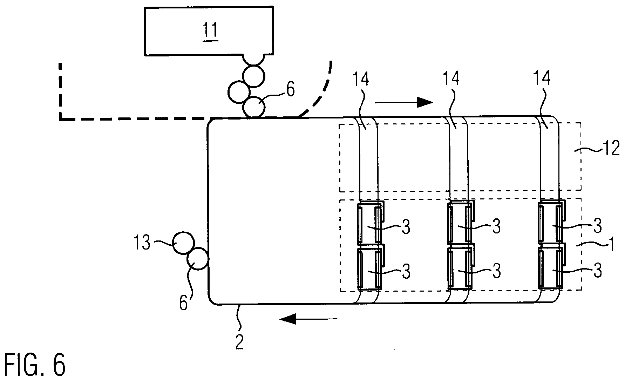

Figur 6 zeigt schematisch einen möglichen Aufbau einer solchen Vorrichtung zum Behandeln von Behältern. Insbesondere umfasst diese beispielhafte Ausführungsform eine Blasformmaschine 11 zur Herstellung von Behältern. Andere Behälterquellen (z.B. Mehrwegbehälter aus einer Zuführung oder ähnliches) können alternativ zur Blasformmaschine 11 verwendet werden (hier nicht gezeigt). Die Behälter werden dann durch bekannte Mittel, beispielsweise einen Übergabestern oder Ähnliches an eine Wendeeinheit 6 übergeben und von dort an ein Trägerelement 3 übergeben.

In dem gezeigten Beispiel erfolgt die Übergabe direkt von der Wendeeinheit 6, sodass die Übergabeeinrichtung als Teil der Wendeeinheit 6 und/oder als Teil des Trägerelementes 3 ausgebildet sein kann. Durch die Trägerelemente 3 werden die Behälter, typischerweise mehrere Behälter auf einmal, dann entlang der Transportkurve 2 bewegt. In der beispielhaften Vorrichtung sind mehrere Weichen 14 vorgesehen, mit denen die Trägerelemente 3 wahlweise über einen der Wartebereiche 12 zu einer der Behälterbehandlungsstationen 1 geführt werden können. Die Behälterbehandlungsstationen 1 sind hier ebenso wie die Wartebereich 12 parallel angeordnet, sodass die Behälter in den verschiedenen Bereichen parallel prozessiert werden können. Im Wartebereich 12 können Trägerelemente warten, während das vorige Trägerelement behandelt wird. Optional können diese allerdings auch über die Transportbahn an der Stelle vorbeigeführt werden, wenn bei Bewegung des Transportbahnsegments die Transportbahn durch ein weiteres Transportbahnsegment geschlossen wird, während die Behälter behandelt werden.

Nach der Behandlung der Behälter werden diese weiter entlang der Transportbahn 2 geführt und können dann an eine weitere Wendeeinheit 6 übergeben werden und durch einen weitere Übergabeeinrichtung 13, beispielsweise ein Transportstern, für die weitere Behandlung übergeben werden, beispielsweise dann einem Füller zugeführt werden.

## Patentansprüche

1. Vorrichtung zum Behandeln von Behältern, umfassend eine Behälterbehandlungsstation (1), eine Transportbahn (2), wenigstens ein Transportelement (5a, 5b) und ein Trägerelement (3) zur Aufnahme von mindestens einem Behälter (4), das über das Transportelement (5a, 5b) entlang der Transportbahn (2) bewegt werden kann, wobei ein Segment (2a) der Transportbahn (2) so ausgebildet ist, dass es mit einem Trägerelement (3) bewegt werden kann, sodass durch die Bewegung des Segments (2a), die am Trägerelement (3) aufgenommenen Behälter (4), zur Behälterbehandlung in die Behälterbehandlungsstation (1) eingebracht werden können, **dadurch gekennzeichnet, dass**
das Trägerelement (3) dazu ausgebildet ist, die Behälterbehandlungsstation (1) zu verschließen, wenn die Behälter (4) zur Behälterbehandlung in die Behälterbehandlungsstation (1) eingebracht sind.

2. Vorrichtung nach Anspruch 1, wobei die Behälterbehandlungsstation (1) zur gleichzeitigen Behandlung von mehreren Behältern (4) ausgebildet ist und das Trägerelement (3) zur Aufnahme von mehreren Behältern (4) ausgebildet ist.

3. Vorrichtung nach einem der Ansprüche 1 bis 2, wobei die Vorrichtung so ausgebildet ist, dass bei der Bewegung des Segments (2a) und Einbringen der am Trägerelement (3) aufgenommenen Behälter in die Behälterbehandlungsstation (1) das bewegte Segment (2a) der Transportbahn durch ein weiteres Transportbahnsegment (2b) ersetzt wird.

4. Vorrichtung nach einem der Ansprüche 1 bis 3, wobei die Behälterbehandlungsstation (1) beweglich angeordnet ist.

5. Vorrichtung nach einem der Ansprüche 1 bis 4, wobei das Trägerelement (3) dazu ausgebildet ist, die Behälter (4) kopfüber zu transportieren.

6. Vorrichtung nach einem der Ansprüche 1 bis 5, wobei die Vorrichtung eine Wendeeinheit (6) umfasst, mit der die Behälter (4) um 180° gedreht werden können, sodass sie kopfüber transportiert werden, sowie eine Übergabeeinrichtung (10), mit der Behälter (4) von der Wendeeinheit (6) an ein Trägerelement (3) übergeben werden können.

7. Vorrichtung nach Anspruch 6, wobei die Vorrichtung eine zweite Wendeeinheit (6) und eine Übergabeeinrichtung (10) umfasst, mit der Behälter von einem Trägerelement (3) an eine Wendeeinheit (6) übergeben werden können, die die Behälter um 180° dreht, sodass diese wieder aufrecht transportiert werden.

8. Vorrichtung nach einem der Ansprüche 1 bis 7, wobei die Bewegung des Segments (2a) zur Behälterbehandlungsstation (1) eine Abwärtsbewegung senkrecht zur Transportbahn ist und optional das Trägerelement (3) so ausgebildet ist, dass er als Deckel die Behälterbehandlungsstation (3) verschließen kann.

9. Verfahren zum Behandeln von Behältern (4) umfassend die folgenden Schritte:
Transportieren der Behälter (4) entlang der Transportbahn (2) über ein Transportelement (5a, 5b) mit einem Trägerelement (3);
Bewegen eines Segments (2a) der Transportbahn (2) mit dem Trägerelement (3), sodass durch die Bewegung des Segments (2a) die am Trägerelement (3) aufgenommenen Behälter (4) zur Behälterbehandlung in die Behälterbehandlungsstation (1) eingebracht werden und **dadurch gekennzeichnet, dass**
das Trägerelement (3) die Behälterbehandlungsstation (1) verschließt, wenn die Behälter (4) zur Behälterbehandlung in die Behälterbehandlungsstation (1) eingebracht sind;
Behandeln der Behälter in der Behälterbehandlungsstation (1);
Bewegen des Segments (2a) der Transportbahn (2) mit dem Trägerelement (3), sodass die Behälter (4) aus der Behälterbehandlungsstation (1) entfernt werden und auf die Transportbahn (2) zurückgeführt werden.

10. Verfahren zum Behandeln von Behältern (4) nach Anspruch 9, wobei das Verfahren mit einer Vorrichtung zum Behandeln von Behältern (4) nach einem der Ansprüche 1 bis 7 durchgeführt wird.

11. Verfahren zum Behandeln von Behältern (4) nach Anspruch 9 oder Anspruch 10, des Weiteren umfassend einen oder mehrere der folgenden Schritte:
Zuführen von Behältern (4) in einem linearen Strom zu einer Wendeeinheit (6);
Drehen von einem oder mehreren Behältern (4) um 180° mit der Wendeeinheit (6);
Übergeben von einem oder mehreren Behältern (4) von der Wendeeinheit (6) an ein Trägerelement (3), wobei die Übergabe direkt oder indirekt erfolgen kann;
Verschließen der Behälterbehandlungsstation (1) mit dem Trägerelement (3);
Übergeben der Behälter (4) vom Trägerelement (3) an eine Wendeeinheit (6), wobei die Übergabe direkt oder indirekt erfolgen kann;
Drehen der Behälter (4) um 180° mit der Wendeeinheit (6);
Wegführen der Behälter (4) von der Wendeeinheit (6) in einem linearen Strom.

12. Verfahren zum Behandeln von Behältern (4) nach Anspruch 9, Anspruch 10 oder Anspruch 11, des Weiteren umfassend einen oder mehrere der folgenden Schritte:
Ersetzen des bewegten Segments (2a) der Transportbahn durch ein weiteres Transportbahnsegment (2b);
Bewegen der Behälterbehandlungsstation (1).

## Claims

1. Apparatus for treating containers, comprising a container treatment station (1), a transport path (2), at least one transport element (5a, 5b) and a carrier element (3) for receiving at least one container (4) which can be moved along the transport path (2) via the transport element (5a, 5b), a segment (2a) of the transport path (2) being configured such that it can be moved with a carrier element (3), so that, by the movement of the segment (2a), the containers (4) accommodated on the carrier element (3) can be introduced into the container treatment station (1) for container treatment, **characterized in that** the carrier element (3) is configured to close the container treatment station (1) when the containers (4) are introduced into the container treatment station (1) for container treatment.

2. Apparatus according to claim 1, wherein the container treatment station (1) is designed for simultaneous treatment of several containers (4) and the carrier element (3) is designed for receiving several containers (4).

3. Apparatus according to any one of claims 1 to 2, wherein the apparatus is configured such that when the segment (2a) is moved and the containers received on the carrier element (3) are introduced into the container treatment station (1), the moved segment (2a) of the transport path is replaced by another transport path segment (2b).

4. Apparatus according to any one of claims 1 to 3, wherein the container treatment station (1) is movably arranged.

5. Apparatus according to any one of claims 1 to 4, wherein the carrier element (3) is designed to transport the containers (4) upside down.

6. Apparatus according to any one of claims 1 to 5, wherein the apparatus comprises a turning unit (6) for turning the containers (4) through 180° so that they are transported upside down, and a transfer device (10) for transferring containers (4) from the turning unit (6) to a carrier element (3).

7. Apparatus according to claim 6, wherein the apparatus comprises a second turning unit (6) and a transfer device (10) for transferring containers from a carrier element (3) to a turning unit (6) which turns the containers by 180° so that they are transported upright again.

8. Apparatus according to any one of claims 1 to 7, wherein the movement of the segment (2a) towards the container treatment station (1) is a downward movement perpendicular to the transport path and optionally the carrier element (3) is configured to act as a lid to close the container treatment station (3).

9. Method of treating containers (4) comprising the following steps:
transporting the containers (4) along the transport path (2) via a transport element (5a, 5b) with a carrier element (3);
moving a segment (2a) of the transport path (2) with the carrier element (3) so that the containers (4) received on the carrier element (3) are introduced into the container treatment station (1) for container treatment by the movement of the segment (2a) and **characterised in that** the carrier element (3) closes the container treatment station (1) when the containers (4) are introduced into the container treatment station (1) for container treatment;
treating the containers in the container treatment station (1);
moving the segment (2a) of the transport path (2) with the carrier element (3) so that the containers (4) are removed from the container treatment station (1) and returned to the transport path (2).

10. Method for treating containers (4) according to claim 9, wherein the method is carried out with an apparatus for treating containers (4) according to any one of claims 1 to 7.

11. Method of treating containers (4) according to claim 9 or claim 10, further comprising one or more of the following steps:
feeding containers (4) in a linear flow to a turning unit (6);
turning one or more containers (4) by 180° with the turning unit (6);
transferring one or more containers (4) from the turning unit (6) to a carrier element (3), whereby the transfer can take place directly or indirectly;
closing the container treatment station (1) with the carrier element (3);
transferring the containers (4) from the carrier element (3) to a turning unit (6), whereby the transfer can take place directly or indirectly;
turning the containers (4) by 180° with the turning unit (6);
moving the containers (4) away from the turning unit (6) in a linear flow.

12. Method of treating containers (4) according to claim 9, claim 10 or claim 11, further comprising one or more of the following steps:
replacing the moving segment (2a) of the transport path with another transport path segment (2b);
moving the container treatment station (1).

## Revendications

1. Dispositif de traitement de récipients, comprenant une station de traitement de récipients (1), une voie de transport (2), au moins un élément de transport (5a, 5b) et un élément de support (3) pour loger au moins un récipient (4) qui peut être déplacé par l'élément de transport (5a, 5b) le long de la voie de transport (2), dans lequel un segment (2a) de la voie de transport (2) est conçu de sorte à pouvoir être déplacé avec un élément de support (3), de sorte que le déplacement du segment (2a) permet aux récipients (4) reçus au niveau de l'élément de support (3) d'être introduits dans la station de traitement de récipients (1) à des fins de traitement de récipients, **caractérisé en ce que** :
l'élément de support (3) est conçu pour fermer la station de traitement de récipients (1) lorsque les récipients (4) sont introduits dans la station de traitement de récipients (1) à des fins de traitement de récipients.

2. Dispositif selon la revendication 1, dans lequel la station de traitement de récipients (1) est conçu pour traiter simultanément plusieurs récipients (4) et l'élément de support (3) est conçu pour loger plusieurs récipients (4).

3. Dispositif selon l'une quelconque des revendications 1 à 2, dans lequel le dispositif est conçu de sorte que lors du déplacement du segment (2a) et de l'introduction des récipients reçus par l'élément de support (3) dans la station de traitement de récipients (1), le segment déplacé (2a) de la voie de transport est remplacé par un autre segment de voie de transport (2b).

4. Dispositif selon l'une quelconque des revendications 1 à 3, dans lequel dans lequel la station de traitement de récipients (1) est agencé de manière à être mobile.

5. Dispositif selon l'une quelconque des revendications 1 à 4, dans lequel l'élément de support (3) est conçu pour transporter les récipients (4) à l'envers.

6. Dispositif selon l'une quelconque des revendications 1 à 5, dans lequel le dispositif comprend une unité de retournement (6) avec laquelle les récipients (4) peuvent être tournés de 180° de manière à être transportés à l'envers, et un dispositif de transfert (10) avec lequel des récipients (4) peuvent être transférés de l'unité de retournement (6) à un élément de support (3).

7. Appareil selon la revendication 6, dans lequel l'appareil comprend une seconde unité de retournement (6) et un dispositif de transfert (10) pour transférer des récipients d'un élément de support (3) à une unité de retournement (6) qui fait tourner les récipients de 180° de telle sorte qu'ils sont transportés à nouveau verticalement.

8. Dispositif selon l'une des revendications 1 à 7, dans lequel le déplacement du segment (2a) vers la station de traitement de récipients (1) est un déplacement vers le bas perpendiculaire à la voie de transport et, facultativement, l'élément de support (3) est conçu de sorte qu'il peut fermer la station de traitement de récipients (3) en tant que couvercle.

9. Procédé de traitement de récipients (4), comprenant les étapes ci-dessous consistant à :
transporter les récipients (4) le long de la voie de transport (2) par l'intermédiaire d'un élément de transport (5a, 5b) avec un élément de support (3) ;
déplacer un segment (2a) de la voie de transport (2) avec l'élément de support (3), de telle sorte que le déplacement du segment (2a) provoque l'introduction des récipients (4) reçus par l'élément de support (3) dans la station de traitement de récipients (1) à des fins de traitement de récipients, et **caractérisé en ce que**
l'élément de support (3) ferme la station de traitement de récipients (1) lorsque les récipients (4) sont introduits dans la station de traitement de récipients (1) à des fins de traitement de récipient ;
traiter les récipients dans la station de traitement de récipients (1) ;
déplacer le segment (2a) de la voie de transport (2) avec l'élément de support (3), de telle sorte que les récipients (4) sont retirés de la station de traitement de récipients (1) et sont renvoyés sur la voie de transport (2).

10. Procédé de traitement de récipients (4) selon la revendication 9, dans lequel le procédé est mis en oeuvre avec un dispositif de traitement de récipients (4) selon l'une quelconque des revendications 1 à 7.

11. Procédé de traitement de récipients (4) selon la revendication 9 ou la revendication 10, comprenant en outre une ou plusieurs des étapes suivantes consistant à :
amener les récipients (4) dans un flux linéaire vers une unité de retournement (6) ; tourner un ou plusieurs récipients (4) de 180° à l'aide de l'unité de retournement (6) ; transférer un ou plusieurs récipients (4) de l'unité de retournement (6) à un élément de support (3), le transfert pouvant avoir lieu directement ou indirectement ;
fermer la station de traitement de récipients (1) à l'aide de l'élément de support (3) ; transférer les récipients (4) de l'élément de support (3) à une unité de retournement (6), le transfert pouvant avoir lieu directement ou indirectement ;
tourner les récipients (4) de 180° à l'aide de l'unité de retournement (6) ;
éloigner les récipients (4) de l'unité de retournement (6) dans un flux linéaire.

12. Procédé de traitement de récipients (4) selon la revendication 9, la revendication 10 ou la revendication 11, comprenant en outre une ou plusieurs des étapes suivantes consistant à :
remplacer le segment déplacé (2a) de la voie de transport par un autre segment de voie de transport (2b) ;
déplacer la station de traitement de récipients (1).
